# EUROPEAN PATENT SPECIFICATION

(11) **EP 2 977 804 B1**
(45) Date of publication and mention of the grant of the patent: **06.09.2017**
(21) Application number: 14178597.2
(22) Date of filing: 25.07.2014
(51) Int. Cl.: G02B 6/44

(54) **Optical cable**
Optisches Kabel
Câble optique

(43) Date of publication of application: 27.01.2016
(73) Proprietor: CCS Technology, Inc., Wilmington, DE 19803 (US)
(72) Inventor: Wünsch, Günter, 96465 Neustadt bei Coburg (DE)
(74) Representative: Epping - Hermann - Fischer

(56) References cited:
- EP-A1- 0 518 738
- WO-A1-98/01785
- DE-A1- 3 637 205
- US-A- 4 746 190
- US-B1- 6 574 400

## Description

### Technical Field

The invention relates to an optical cable comprising a plurality of buffer tubes which are alternately stranded in different directions along a longitudinal direction of the optical cable. The invention is further directed to a method of manufacturing the optical cable.

### Background

An optical cable may comprise a plurality of buffer tubes respectively encapsulating optical fibers. The buffer tubes may be stranded along a longitudinal direction of the optical cable with alternate directions of lay so that the buffer tubes are wound in a helical or cross-helical structure. In order to prevent unwinding of the stranded buffer tubes, an area of the buffer tubes where the direction of lay changes from one direction to the other direction can be fixed to the strength member element.

According to usual practice, the helical or cross-helical structure of the stranded buffer tubes may be fixed to the strength member element of the optical cable by using yarns which are wrapped around the stranded buffer tubes. The yarns are wound around the buffer tubes in an appropriate manner to prevent any independent untwisting of the buffer tubes and to hold and fix the helix of the buffer tubes at the strength member element.

The arrangement of the holding yarns onto the stranded buffer tubes is a complex and time-consuming process and is, moreover, very accident-sensitive. The helix of the yarns has to be moved by rotary motion around the stranded buffer tubes. The quality of the yarns is essential for an effective manufacturing process. Yarns of low quality, such as yarns with any discontinuity, may result in a rupture or may damage the optical fibers housed by the buffer tubes. Furthermore, yarns with low-grade materials may cause problems during manufacturing due to thermal shrinking or due to mechanical friction. It is mandatory to use yarns with low shrinking properties and having a structure of low abrasion and low friction which inevitably leads to high priced materials of high quality. Another detrimental aspect associated with the use of yarns as fixing elements for stranded buffer tubes is that the helix of the yarns has to be elaborately removed during the later installation of the optical cable.

According to another method to securely hold the buffer tubes in a stranded manner with alternating directions of lay on a strength member element, a thin film of an extruded material may be disposed around the stranded buffer tubes over the whole length of the optical cable. However, due to the low holding force of the soft melted material during the extrusion process, a distance between the area at which the melted material is disposed onto the buffer tubes and a position at which the heated material is sufficiently cooled down to fix the stranded buffer tubes to the strength member element is very large. As a consequence of this, the reversal area in which the direction of lay of the buffer tubes changes is large so that a unidirectional guiding of the buffer tubes along the longitudinal direction of the optical cable occurs in the reversal area. Long reversal areas have a negative influence on the optical properties of an optical cable and lead to an increase of attenuation during bending and buckling of the cable at low temperatures.

In DE 3637205 A1, WO 98/01785 A1, US 4,746,190 A1 and EP 0518738 A1, fiber optic cables are described, wherein buffer tubes encapsulating optical fibers are stranded around a central element of an optical cable. The central element is coated by an adhesive layer to fix the stranded buffer tubes to the central element. US 6,574,400 B1 is directed to a fiber optic cable with water-blocking features. The fiber optic cable comprises a cable core including fiber optic cable components in the form of buffer tubes having a core binder component stranded there around. The buffer tubes are S-Z stranded about a central member. Longitudinally spaced, annular, water-absorbent stripes comprising a composition of water-absorbent and adhesive substances are deposited on at least portions of each of the fiber optic cable components.

It is a desire to provide an optical cable comprising stranded buffer tubes which allows a secure holding of the stranded buffer tubes on a strength member element without negatively influencing the optical properties of the optical cable. It is a further desire to provide a method of manufacturing an optical cable comprising stranded buffer tubes which allows a secure holding of the stranded buffer tubes on a strength member element without negatively influencing the optical properties of the optical cable.

### Summary

Embodiments disclosed in the detailed description include an optical cable as defined in present claim 1 and a method of manufacturing the optical cable as specified in present claim 11.

According to an embodiment of the optical cable, the optical cable comprises a strength member element, and a plurality of buffer tubes, wherein each of the buffer tubes encapsulates at least one optical fiber. Each of the buffer tubes has at least one first section and at least one second section adjacent to the at least one first section, wherein the at least one first section of the buffer tubes is stranded around the strength member element in a first direction of lay and the at least one second section of the buffer tubes is stranded around the strength member element in a second direction of lay opposite to the first direction of lay. The optical cable further comprises an adhesive component disposed in at least one fixing area of the optical cable.

The at least one fixing area is a regional area of the optical cable, where the at least one first section of the buffer tubes adjoins the at least one second section of the buffer tubes. The buffer tubes are fixed to the strength member element by the adhesive component.

The adhesive component may be a glue which is disposed to any reversal points along the longitudinal direction of the optical cable where the direction of lay of the buffer tubes changes between the left and the right direction of lay. The deposition of the adhesive component to the at least one regional fixing area enables that the direction of lay of the buffer tubes may abruptly change without guiding the buffer tubes in a direction parallel to the longitudinal direction of the optical cable at the reversal points. Each reversal point is a point-shaped position of the buffer tubes in each of the fixing areas, where the direction of lay of the buffer tubes abruptly changes between different directions of lay or where a positive inclination of the buffer tubes is changed to a negative inclination.

The buffer tubes are stranded in a helical structure, such as an SZ helix, along a longitudinal direction of the cable around the strength member element. The application of the adhesive component in localized fixing areas allows to fix the helical structure of the stranded buffer tubes so that an untwisting of the stranded buffer tubes beyond the reversal points may be prevented. The fixing areas are localized regions along the longitudinal direction of the optical cable which means that it is not necessary to apply the adhesive along the entire length of the optical cable, as described above for the method of extruding a thin film of a thermoplastic material along the whole length of the optical cable. Each of the fixing areas may have an elongation of about two times to three times of the diameter of a single buffer tube.

A method to manufacture an optical cable is specified in present claim 12. The method comprises the provision of a strength member element. A plurality of buffer tubes having at least one first section and at least one second section adjacent to the at least one first section are stranded around the strength member element such that the at least one first section of the buffer tubes is stranded around the strength member element in a first direction of lay and the at least one second section of the buffer tubes is stranded around the strength member element in a second direction of lay opposite to the first direction of lay. An adhesive component is injected in at least one fixing area of the optical cable. The at least one fixing area is a localized region along the longitudinal direction of the optical cable, where the at least one first section of the buffer tubes adjoins to the at least one second section of the buffer tubes and where the adhesive component is applied to the buffer tubes. The adhesive component is cooled to fix the buffer tubes to the strength member element.

According to the method of manufacturing the optical cable the fixing of the helical structure of the stranded buffer tubes to the strength member element is obtained by directly injecting the adhesive component, for example, a glue comprising a thermoplastic polymer, in the reversal points of the buffer tubes. The injection of the adhesive component is effected in limited time intervals and controlled by the cycles of a stranding machine in which the stranding machine changes the direction of lay between the first and second direction of lay. The direct injection of the glue with high pressure, for example, a pressure up to 30 bar, enables the creation of short fixing areas along the longitudinal direction of the optical cable.

Adjacent fixing areas are separated from each other by regions being free of the adhesive component. Each fixing area contains a reversal point of the buffer tubes where the direction of lay of the buffer tubes abruptly changes from one direction of lay to another direction of lay without guiding the buffer tubes parallel to the longitudinal direction of the optical cable between any reversal points. The amount of glue to be injected is dosed such that an excessive deposition of the glue along the longitudinal direction of the optical cable may be prevented.

The number n of complete turns of 360° of the buffer tubes between adjacent reversal points may be between 0.5 to 10. A range of the lengthwise distance D along the cable between reversal points may be expressed as D = n * S, wherein parameter n specifies the number of complete 360° turns of the buffer tubes and parameter S specifies the lay length of a complete 360° turn of the buffer tubes. According to a preferred embodiment, the lay length of the buffer tubes is between 50 mm and 150 mm so that the lengthwise distance between adjacent reversal points is between at least 25 mm and a maximum of 1500 mm.

It is to be understood that both the foregoing general description and the following detailed description present embodiments and are intended to provide an overview or a framework for understanding the nature and character of the disclosure. The accompanying drawings are included to provide a further understanding, and are incorporated into and constitute a part of this specification. The drawings illustrate various embodiments and, together with the description, serve to explain the principles and operation of the concepts disclosed.

### Brief Description of the Drawings

Figure 1 shows an embodiment of a core section of an optical cable with stranded buffer tubes in a longitudinal view of the optical cable.
Figure 2 shows an embodiment of an optical cable with stranded buffer tubes in a lateral cut of the optical cable.
Figure 3 shows an embodiment of a manufacturing line to manufacture an optical cable with stranded buffer tubes.
Figure 4 shows an embodiment of a caterpillar and torsion blocker of the manufacturing line in a lateral view.
Figure 5A shows an embodiment of a stranding apparatus with injection nozzles for injecting an adhesive component to reversal points of the buffer tubes of the optical cable.
Figure 5B shows an arrangement of injection nozzles to inject an adhesive component to reversal points of the buffer tubes of the optical cable.

### Detailed Description

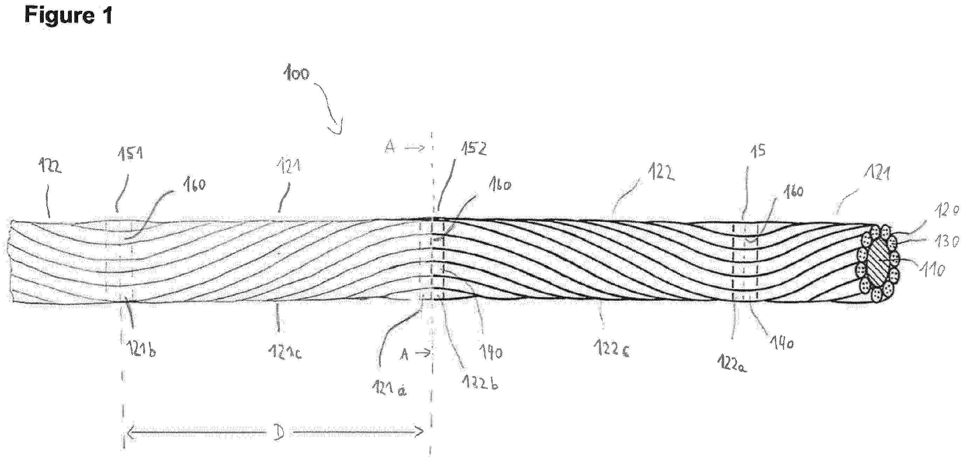

Figure 1 shows an embodiment of a core section 100 of an optical cable comprising a strength member element 110 and a plurality of buffer tubes 120 in a longitudinal view. Each of the buffer tubes 120 encapsulates at least one optical fiber 130. Each of the buffer tubes 120 has at least one first section 121 and at least one second section 122 adjacent to the at least one first section 121. The at least one first section 121 of the buffer tubes 120 is stranded around the strength member element 110 in a first direction of lay. The at least one second section 122 of the buffer tubes 120 is stranded around the strength member element 110 in a second direction of lay opposite to the first direction of lay. The first direction of lay may be a right direction of lay and the second direction of lay may be a left direction of lay or vice versa.

The core section 100 of the optical cable further comprises an adhesive component 140 disposed in at least one fixing area 151, 152, 153 of the optical cable. The buffer tubes 120 are fixed to the strength member element 110 by the adhesive component 140. The at least one fixing area 151, 152, 153 is a regional area of the optical cable where the adhesive component 140 is deposited to the reversal points of the stranded buffer tubes and where the at least one first section 121 of the buffer tubes 120 adjoins the at least one second section 122 of the buffer tubes. That means that the fixing areas and hence the adhesive component 140 do not extend along the entire length of the core section inside the cable. According to an embodiment of the optical cable, the at least one fixing area 151, 152 and 153 has a length of two to three times of the diameter of one of the buffer tubes 120.

Each of the at least one first section 121 of the buffer tubes 120 has end portions 121a, 121b and a middle portion 121c, and each of the at least one second section 122 of the buffer tubes 120 has end portions 122a, 122b and a middle portion 122c. One of the end portions of the at least one first section 121 of the buffer tubes, for example the end portion 121a, adjoins to one of the end portions of the at least one second section 122 of the buffer tubes, for example the end portion 122b. The at least one fixing area 151, 152, 153, extends from the border between the middle portion 121c and one of the end portions 121a, 121b of the at least one first section 121 of the buffer tubes to the border between the middle portion 122c and one of the end portions 122b, 122a of the at least one second section 122 of the buffer tubes. That means that the fixing areas 151, 152, 153 in which the adhesive component 140 is disposed completely extend over the respective end portions of the at least one first and second sections 121, 122 of the buffer tubes, but does not extend to the respective middle portions of the at least one first and second section 121, 122 of the buffer tubes.

The cutout of the optical core 100 shown in Figure 1 comprises, for example, a fixing area 151, a fixing area 152 and a fixing area 153. The adhesive component 140 is disposed in each of the fixing areas 151, 152 and 153. The fixing area 151 and the fixing area 152 are disposed at a distance to each other along the longitudinal direction of the optical cable. The distance between the fixing areas 151, 152 has the length of a region of the optical cable in which the middle portion 121c of the at least one first section 121 of the buffer tubes 120 is located. The fixing area 152 and the fixing area 153 are also disposed at a distance to each other along the longitudinal direction of the optical cable. The distance between the fixing area 152 and the fixing area 153 has the length of another region of the optical cable in which the middle portion 122c of the second section 122 of the buffer tubes is located.

The stranded buffer tubes are fixed in the fixing areas 151, 152, 153 by the adhesive component 140 such that an unwinding of the buffer tubes is prevented. The fixing areas 151, 152 and 153 are the regions where the direction of lay of the buffer tubes changes from the first direction to the second direction and vice versa. The deposition of the adhesive component in the fixing areas 151, 152 and 153 allows that the buffer tubes may be stranded such that the direction of lay of the buffer tubes 120 abruptly changes from one direction of lay to the other direction of lay at a respective reversal point 160 of the buffer tubes, wherein the reversal point is a point-shaped position of the buffer tubes at which the direction of lay of the buffer tubes abruptly changes. The reversal point of the buffer tubes is located between the section of the buffer tubes having the first direction of lay and the subsequent section of the buffer tubes having the second direction of lay. A respective reversal point is located in each of the fixing areas 151, 152 and 153 of the optical cable 1.

The deposition of the adhesive component 140 in the fixing areas enables that the buffer tubes 120 are stranded such that the buffer tubes change their stranding direction at each reversal point 160 of the buffer tubes in the fixing areas 151, 152 and 153 without stranding the buffer tubes unidirectionally along the longitudinal direction of the optical cable 1. That means that by depositing the adhesive component 140 to the fixing areas it is possible to strand the optical fibers in one direction of lay, for example, a right direction of lay in the sections 121 of the buffer tubes and in another direction of lay, for example, a left direction of lay, in the subsequent sections 122 without being guided parallel to the longitudinal direction of the optical cable between reversal points 160 in subsequent fixing areas.

As shown in Figure 1, the buffer tubes are stranded in section 121 with a positive inclination and are stranded in the adjacent section 122 with a negative inclination. In a portion of the section 121 far away from the reversal point 160 the buffer tubes are stranded with a constant positive inclination, for example an inclination of +70°. In an adjacent portion of the section 121 of the buffer tubes which is next to the reversal point 160 the inclination of the buffer tubes slowly increases and reaches a maximum at the reversal point 160. In a portion of the adjacent section 122 of the buffer tubes next to the reversal point 160 the inclination of the buffer tubes slowly decreases again until the buffer tubes are stranded with a constant negative inclination, for example an inclination of -70°, at a portion of the section 122 of the buffer tubes far away from the reversal point 160.

A reversal length of the cable is specified as a longitudinal elongation of the cable between the section of the buffer tubes with the constant positive inclination, i.e. the minimum positive inclination, and the adjacent section of the buffer tubes with the constant negative inclination, i.e. the minimum negative inclination. The embodiment of the optical cable allows that the reversal length is lower than one lay length of the buffer tubes. That means that the method of fixing the buffer tubes by injecting the adhesive component 140 to the fixing areas allows to produce an optical cable having a reversal length of less than a range between 150 mm and 50 mm in dependence on the lay length of the buffer tubes.

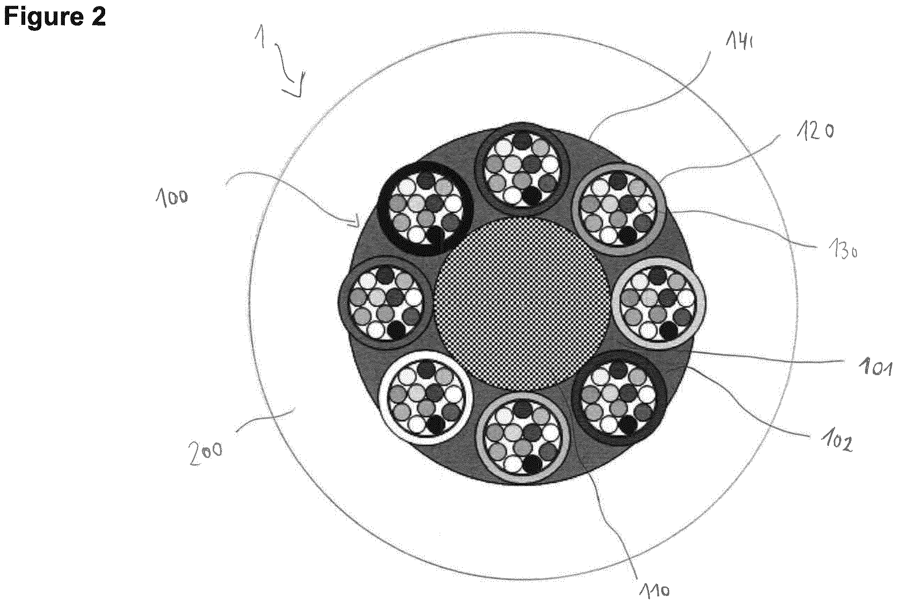

Figure 2 shows a lateral cut of an optical cable 1 comprising the core section 100 of Figure 1. The lateral cut is shown at the position of the fixing area 152 marked in Figure 1 by reference signs A-A. The cable core 100 of the optical cable 1 comprises the central strength member element 110, the buffer tubes 120 with the optical fibers 130 housed therein and the adhesive component 140. The optical cable further comprises a cable jacket 200 which surrounds the cable core 100.

According to an embodiment of the optical cable 1 as shown in Figure 2, the adhesive component 140 is disposed at each of the fixing areas such that the end portions 121a, 121b of each of the first sections 121 of the buffer tubes and the end portions 122a, 122b of each of the second sections 122 of the buffer tubes are embedded in the adhesive component 140. The respective middle portion 121c, 122c of the at least one first and second sections 121, 122 of the optical cable is uncovered by the adhesive component 140.

The adhesive component 140 may be disposed in the at least one fixing area 151, 152 and 153 such that an area 101 of the optical cable between the buffer tubes 120 and the strength member element 110 and an area 102 of the optical cable between the buffer tubes 120 and the cable jacket 200 are completely filled up with the adhesive component 140. In particular, the adhesive component 140 may be configured to block water from propagating along the buffer tubes 120 in the longitudinal direction of the optical cable 1 between the cable core 100 and the cable jacket 200.

The adhesive component 140 may be a glue, for example a glue which comprises a thermoplastic polymer, such as polyurethane or polyester. The adhesive component may be a hot melt adhesive of a thermoplastic material. According to a possible embodiment the adhesive component may comprise an oil and/or an emollient agent or mixtures thereof. The properties of the adhesive component 140 may be adjusted by adding oils and/or emollient agents to the base material of a thermoplastic polymer so that, on the one hand the adhesive force of the adhesive component is sufficient to hold the buffer tubes 120 stranded with different directions of lay around the strength member element and, on the other hand, allows the removal of the adhesive component by hand for any installation of the optical cable without using additional tools.

Each of the buffer tubes 120 may have a diameter of 0.5 mm to 3.0 mm. Each of the buffer tubes may encapsulate 1 to 36 of the optical fibers 130. The buffer tubes may contain at least a material of one of polypropylene, polybutylene terephthalate, polyamide and fluoric synthetic materials as well as mixtures thereof. The material of the buffer tube may contain an organic or anorganic filler. The cable may comprise at least three to thirty of the buffer tubes. According to another embodiment the buffer tubes may be disposed in a multi-layer arrangement in the core section of the optical cable around the strength member element.

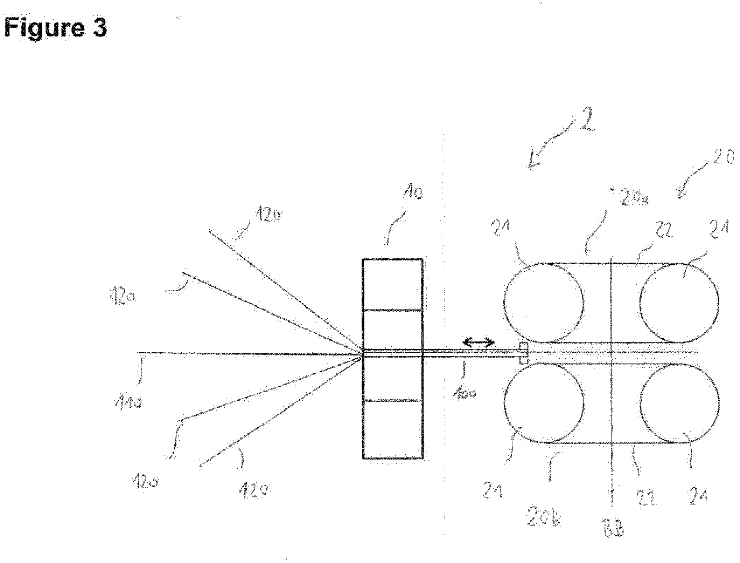

Figure 3 shows an embodiment of a manufacturing line 2 to manufacture the optical cable 1. The manufacturing line 2 comprises a stranding and fixing apparatus 10 which receives the strength member element 110 and the plurality of buffer tubes 120. The stranding and fixing apparatus 10 is configured to strand the buffer tubes around the strength member element 110 such that the at least one first section 121 of the buffer tubes 120 is stranded around the strength member element 110 in the first direction of lay and the at least one second section 122 of the buffer tubes 120 is stranded around the strength member element 110 in the second direction of lay opposite to the first direction of lay.

The apparatus 10 is further configured to inject the adhesive component 140 in the fixing areas 151, 152, 153 of the optical cable 1, wherein the fixing areas are regional areas of the optical cable where the at least one first section 121 of the buffer tubes adjoins the at least one second section 122 of the buffer tubes. A low amount of the adhesive component 140 is injected to the fixing areas where the reversal points 160 of the buffer tubes are located. The point in time to inject the adhesive component 140 may be determined by the cycles in which the buffer tubes are stranded in the different directions of lay.

The core section 100 is further transported to a caterpillar and torsion blocker apparatus 20 located behind the stranding and fixing apparatus 10. According to the embodiment shown in Figure 3, the manufacturing line 2 comprises caterpillar and torsion blocker devices 20a and 20b. Each of the caterpillar and torsion blocker devices comprises a roll unit 21 to move a caterpillar 22. The adhesive component 140 which is injected in the fixing areas 151, 152 and 153, and thus also in the reversal points 160, is immediately annealed by the cold material of the buffer tubes 120. Any excessive material of the adhesive component 140 is pressed in the interstices 101 and 102 by means of the respective caterpillar 22 of the caterpillar and torsion blocker devices 20a and 20b.

The caterpillar 22 may have several segments to enable an appropriate shaping of the core section 100. The caterpillar treads may be cooled so that the surface of the adhesive component is directly cooled down and any bonding with the caterpillar treads may be prevented. The cooling of the caterpillar treads may be effected by a cooling fluid and/or by air cooling from the outside.

After being transported through the caterpillar and torsion blocker devices 20a and 20b, the readymade cable core section 100 may be wound on a reel for further manufacturing or may be directly further processed, for example by extruding the cable jacket 200.

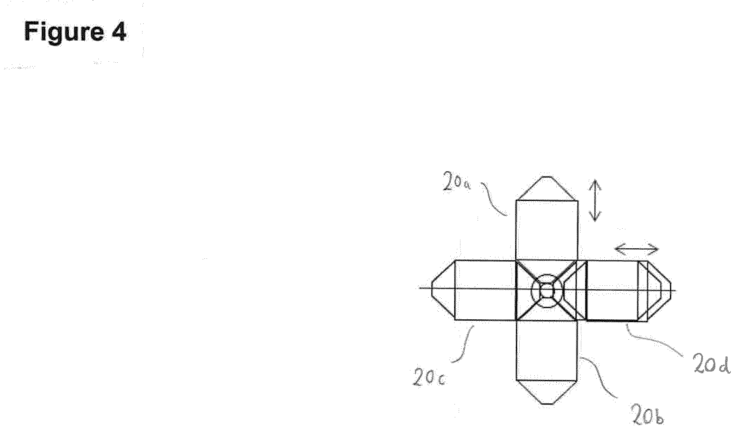

Figure 4 may be a lateral view of the caterpillar and torsion apparatus 20 of Figure 3 as seen from a view indicated in Figure 3 with the reference signs B-B and shows an embodiment of four caterpillar and torsion blocker devices. The caterpillar and torsion blocker devices 20a and 20b may be moved in a vertical direction and the caterpillar and torsion blocker devices 20c and 20d may be moved in a horizontal direction. The arrangement of the caterpillar and torsion blocker apparatus 20 shown in Figure 4 allows to manufacture optical cables having a cable core section 100 of different diameters.

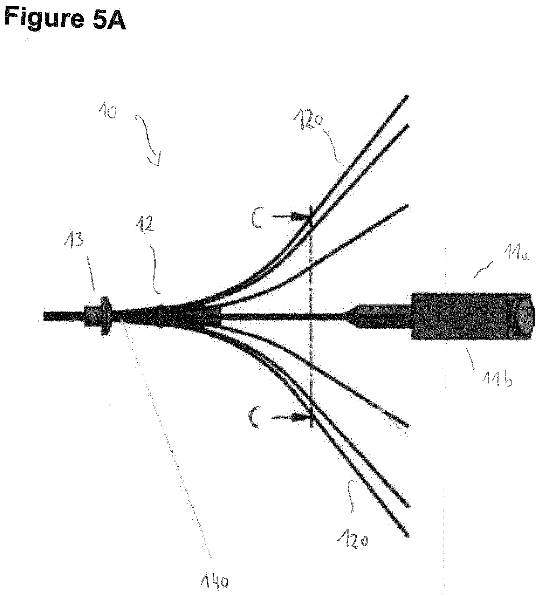

Figure 5A shows a schematic view of an embodiment of the stranding and fixing apparatus 10 which receives the buffer tubes 120. The stranding and fixing apparatus may comprise injection nozzles 11a, 11b for injecting the adhesive component 140 in the fixing areas and hence to the reversal points 160 of the buffer tubes 120 as well as a stranding disk 12 and a stranding nipple 13. The adhesive component 140 may be injected to the surface of the buffer tubes 120 at the position marked with the arrow 140. The adhesive component 140, for example, a hot melt adhesive, may be heated to a temperature between 60° to 120° when injected to the fixing areas.

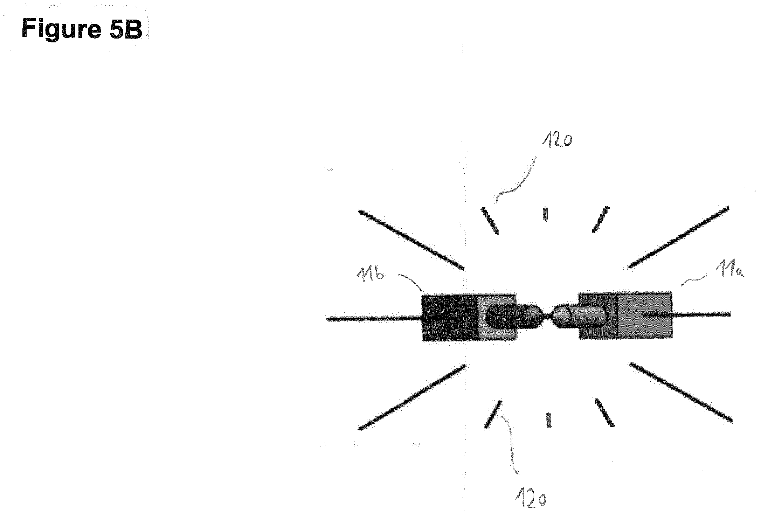

Figure 5B shows the injection nozzles 11a and 11b seen from a line marked in Figure 5A with reference signs C-C. According to the embodiment shown in Figures 5A and 5B, two injection nozzles 11a and 11b are used to inject the adhesive component 140 in the fixing areas. In principle, one or more injection nozzles may be provided in the stranding and fixing apparatus 10.

According to the method of manufacturing described above, the usually used expensive yarns or tapes may be replaced by low-cost adhesive components, such as a low-cost glue of which only a small amount is used for injection to the reversal points of the stranded buffer tubes.

The complete sealing of the fixing areas by means of the adhesive component 140 allows to abstain from using expensive swelling yarns or water-swellable powders for blocking the propagation of water along the buffer tubes. The optical properties of the cable may be improved by reducing macro or micro bendings caused by swelling yarns which are usually located in any interstices of the cable core.

Furthermore, any problems caused by the quality of the yarns to fix the stranded buffer tubes around the strength member element, such as a break of the yarns, thick places, any fluff or any abrasion of the yarns, do not appear by using the adhesive component 140 for fixing the stranded buffer tubes. Furthermore, damage to the optical fibers caused by any indentations and any constrictions by the yarns are avoided.

### List of Reference Signs

- 1: optical cable
- 2: manufacturing line
- 10: stranding and fixing apparatus
- 20: caterpillar and torsion blocker apparatus
- 100: core section
- 110: strength member element
- 120: buffer tube
- 130: optical fiber
- 140: adhesive component
- 151, ..., 153: fixing area
- 160: reversal point
- 200: cable jacket

## Claims

1. An optical cable, comprising:
- a strength member element (110),
- a plurality of buffer tubes (120), wherein each of the buffer tubes (120) encapsulates at least one optical fiber (130),
- a cable jacket (200) surrounding the plurality of the buffer tubes (120),
- wherein each of the buffer tubes (120) has at least one first section (121) and at least one second section (122) adjacent to the at least one first section (121), wherein the at least one first section (121) of the buffer tubes (120) is stranded around the strength member element (110) in a first direction of lay and the at least one second section (122) of the buffer tubes (120) is stranded around the strength member element (110) in a second direction of lay opposite to the first direction of lay,
- an adhesive component (140) disposed in at least one fixing area (151, 152, 153) of the optical cable (1), the at least one fixing area (151, 152, 153) being a regional area of the optical cable (1), where the at least one first section (121) of the buffer tubes (120) adjoins the at least one second section (122) of the buffer tubes (120), wherein the buffer tubes (120) are fixed to the strength member element (110) by the adhesive component (140),
- **characterized in that** the adhesive component (140) is disposed in the at least one fixing area (151, 152, 153) of the optical cable such that a first area (101) of the optical cable between the buffer tubes (120) and the strength member element (110) and a second area (102) of the optical cable between the buffer tubes (120) and the cable jacket (200) are completely filled up with the adhesive component (140).

2. The optical cable as claimed in claim 1,
wherein the direction of lay of the buffer tubes (120) abruptly changes from the first direction of lay to the second direction of lay at a respective reversal point (160) of the buffer tubes located in the at least one fixing area (151, 152, 153) of the optical cable (1).

3. The optical cable as claimed in claims 1 or 2,
wherein the buffer tubes (120) are stranded around the strength member element (110) such that the buffer tubes change their stranding direction at the reversal point (160) in the at least one fixing area (151, 152, 153) without being stranded unidirectional along the longitudinal direction of the optical cable (1).

4. The optical cable as claimed in any of claims 1 to 3,
- wherein each of the at least one first section (121) and the at least one second section (122) of the buffer tubes (120) has end portions (121a, 121b, 122a, 122b) and a middle portion (121c, 122c) located between the respective end portions (121a, 121b, 122a, 122b),
- wherein one of the end portions (121a) of the at least one first section (121) of the buffer tubes adjoins to one of the end portions (122b) of the at least one second section (122) of the buffer tubes,
- wherein the at least one fixing area (151, 152, 153) extends from the border between the middle portion (121c) and said one of the end portions (121a) of the at least one first section (121) of the buffer tubes (120) to the border between the middle portion (122c) and said one of the end portions (122b) of the at least one second section (122) of the buffer tubes (120).

5. The optical cable as claimed in claim 4,
- wherein the end portions (121a, 121b) of the at least one first section (121) of the buffer tubes (120) and the end portions (122a, 122b) of the at least one second section (122) of the buffer tubes (120) are embedded in the adhesive component (140),
- wherein the middle portion (121c, 122c) of each of the buffer tubes is uncovered by the adhesive component (140).

6. The optical cable as claimed in any of claims 1 to 5, wherein the at least one fixing area (151, 152, 153) has a length of two to three times of the diameter of one of the buffer tubes (120).

7. The optical cable as claimed in any of claims 4 to 6, comprising:
- at least a first, a second and a third fixing area (151, 152, 153),
- wherein the adhesive component (140) is disposed in each of the at least one first and second and third fixing areas (151, 152, 153),
- wherein the first and the second fixing areas (151, 152) are disposed in a distance to each other along the longitudinal direction of the optical cable (1), wherein the distance has a length of a region of the optical cable in which the middle portion (121c) of the at least one first section (121) of the buffer tubes (120) is located,
- wherein the second and the third fixing areas (152, 153) are disposed in a distance to each other along the longitudinal direction of the optical cable (10), wherein the distance has the length of another region of the optical cable in which the middle portion (122c) of the at least one second section (122) of the buffer tubes (120) is located.

8. The optical cable as claimed in any of claims 1 to 7, wherein the adhesive component (140) is a glue.

9. The optical cable as claimed in claim 8, wherein the glue contains one of a thermoplastic polymer and/or an oil and/or a an emollient agent or any mixtures thereof.

10. A method to manufacture an optical cable, comprising:
- providing a strength member element (110),
- stranding a plurality of buffer tubes (120) having at least one first section (121) and at least one second section (122) adjacent to the at least one first section (121) around the strength member element (110) such that the at least one first section (121) of the buffer tubes (120) is stranded around the strength member element (110) in a first direction of lay and the at least one second section (122) of the buffer tubes (120) is stranded around the strength member element (110) in a second direction of lay opposite to the first direction of lay, **characterized by**
- injecting an adhesive component (140) in at least one fixing area (151, 152, 153) of the optical cable (1), the fixing area (151, 152, 153) being an area of the optical cable (1), where the at least one first section (121) of the buffer tubes (120) adjoins to the at least one second section (122) of the buffer tubes (120),
- pressing the adhesive component in a first area (101) of the optical cable (1) between the buffer tubes (120) and the strength member element (110) and a second area (102) of the optical cable (1) between the buffer tubes (120) and the cable jacket (200) such that the first and second areas (101, 102) are completely filled up with the adhesive component (140, and
- cooling the adhesive component (140) to fix the buffer tubes (120) to the strength member element (110).

11. The method as claimed in claim 10, comprising:
stranding the buffer tubes (120) around the strength member element (110) such that the direction of lay of the buffer tubes (120) abruptly changes from the left direction of lay to the right direction of lay at a reversal point (160) located in the at least one fixing area (151, 152, 153) of the optical cable (1).

12. The method as claimed in any of the claims 10 or 11, comprising:
stranding the buffer tubes (120) around the strength member element (110) such that the buffer tubes change their stranding direction in the at least one fixing area (151, 152, 153) without being stranded unidirectional along the longitudinal direction of the optical cable (1).

## Patentansprüche

1. Optisches Kabel, aufweisend:
- ein Festigkeitselement (110),
- eine Vielzahl von Aderhüllen (120), wobei jede der Aderhüllen (120) zumindest eine optische Faser (130) einkapselt,
- einen Kabelmantel (200), der die Vielzahl von Aderhüllen (120) umgibt,
- wobei jede der Aderhüllen (120) zumindest einen ersten Abschnitt (121) und zumindest einen zweiten Abschnitt (122) besitzt, der an den zumindest einen ersten Abschnitt (121) angrenzt, wobei der zumindest eine erste Abschnitt (121) der Aderhüllen (120) in einer ersten Legerichtung um das Festigkeitselement (110) verseilt ist und der zumindest eine zweite Abschnitt (122) in einer zweiten Legerichtung entgegengesetzt zu der ersten Legerichtung um das Festigkeitselement (110) verseilt ist,
- eine Klebekomponente (140), die in zumindest einem Befestigungsbereich (151, 152, 153) des optischen Kabels (1) vorgesehen ist, wobei der zumindest eine Befestigungsbereich (151, 152, 153) ein regionaler Bereich des optischen Kabels (1) ist, wobei der zumindest eine erste Abschnitt (121) der Aderhüllen (120) an den zumindest einen zweiten Abschnitt (122) der Aderhüllen (120) angrenzt, wobei die Aderhüllen (120) durch die Klebekomponente (140) an dem Festigkeitselement (110) befestigt sind,
**dadurch gekennzeichnet, dass**
die Klebekomponente (140) in dem zumindest einen Befestigungsbereich (151, 152, 153) des optischen Kabels vorgesehen ist, so dass ein erster Bereich (101) des optischen Kabels zwischen den Aderhüllen (120) und dem Festigkeitselement (110) und ein zweiter Bereich (102) des optischen Kabels zwischen den Aderhüllen (120) und dem Kabelmantel (200) vollständig mit der Klebekomponente (140) ausgefüllt ist.

2. Optisches Kabel nach Anspruch 1,
wobei sich die Legerichtung der Aderhüllen (120) abrupt von der ersten Legerichtung zu der zweiten Legerichtung an einem jeweiligen Wendepunkt (160) der Aderhüllen, der sich in dem zumindest einen Befestigungsbereich (151, 152, 153) des optischen Kabels (1) befindet, ändert.

3. Optisches Kabel nach Anspruch 1 oder 2,
wobei die Aderhüllen (120) um das Festigkeitselement (110) verseilt sind, so dass die Aderhüllen ihre Verseilrichtung an dem Wendepunkt (160) in dem zumindest einen Befestigungsbereich (151, 152, 153) ändern, ohne gleichlaufend entlang der Längsrichtung des optischen Kabels (1) verseilt zu sein.

4. Optisches Kabel nach einem der Ansprüche 1 bis 3,
- wobei sowohl der zumindest eine erste Abschnitt (121) und der zumindest eine zweite Abschnitt (122) der Aderhüllen (120) Endteile (121a, 121b, 122a, 122b) und einen Mittelteil (121c, 122c), der sich zwischen den jeweiligen Endteilen (121a, 121b, 122a, 122b) befindet, besitzt,
- wobei einer der Endteile (121a) des zumindest einen ersten Abschnitts (121) der Aderhüllen an einen der Endteile (122b) des zumindest einen zweiten Abschnitts (122) der Aderhüllen angrenzt,
- wobei sich der zumindest eine Befestigungsbereich (151, 152, 153) von der Grenze zwischen dem Mittelteil (121c) und besagtem einen der Endteile (121a) des zumindest einen ersten Abschnitts (121) der Aderhüllen (120) zu der Grenze zwischen dem Mittelteil (122c) und besagtem einen der Endteile (122a) des zumindest einen zweiten Abschnitts (122) der Aderhüllen (120) erstreckt.

5. Optisches Kabel nach Anspruch 4,
- wobei die Endteile (121a, 121b) des zumindest einen ersten Abschnitts (121) der Aderhüllen (120) und die Endteile (122a, 122b) des zumindest einen zweiten Abschnitts (122) der Aderhüllen (120) in der Klebekomponente (140) eingebettet sind,
- wobei der Mittelteil (121c, 122c) jeder der Aderhüllen von der Klebekomponente (140) unbedeckt ist.

6. Optisches Kabel nach einem der Ansprüche 1 bis 5,
wobei der zumindest eine Befestigungsbereich (151, 152, 153) eine zwei- bis dreifachen Länge des Durchmessers einer der Aderhüllen (120) besitzt.

7. Optisches Kabel nach einem der Ansprüche 4 bis 6, aufweisend:
- zumindest einen ersten, einen zweiten und einen dritten Befestigungsbereich (151, 152, 153),
- wobei die Klebekomponente (140) in jedem des zumindest einen ersten und zweiten und dritten Befestigungsbereichs (151, 152, 153) vorgesehen ist,
- wobei der erste und der zweite Befestigungsbereich (151, 152) beabstandet zueinander entlang der Längsrichtung des optischen Kabels (1) vorgesehen sind, wobei der Abstand eine Länge eines Bereichs des optischen Kabels hat, in dem sich der Mittelteil (121c) des zumindest einen ersten Abschnitts (121) der Aderhüllen (120) befindet,
- wobei der zweite und der dritte Befestigungsbereich (152, 153) beabstandet zueinander entlang der Längsrichtung des optischen Kabels (10) vorgesehen sind, wobei der Abstand eine Länge eines anderen Bereichs des optischen Kabels hat, in der sich der Mittelteil (122c) des zumindest einen zweiten Abschnitts (122) der Aderhüllen (120) befindet.

8. Optisches Kabel nach einem der Ansprüche 1 bis 7,
wobei die Klebekomponente (140) ein Kleber ist.

9. Optisches Kabel nach Anspruch 8,
wobei der Kleber entweder ein thermoplastisches Polymer und/oder ein Öl und/oder einen Weichmacher oder eine Mischung davon enthält.

10. Verfahren zur Herstellung eines optischen Kabels, umfassend:
- Bereitstellen eines Festigkeitselements (110),
- Seilen einer Vielzahl von Aderhüllen (120) mit zumindest einem ersten Abschnitt (121) und zumindest einem zweiten Abschnitt (122) angrenzend an den zumindest einen ersten Abschnitt (121) um das Festigkeitselement (110), so dass der zumindest eine erste Abschnitt (121) der Aderhüllen (120) in einer ersten Legerichtung um das Festigkeitselement (110) verseilt wird und der zumindest eine zweite Abschnitt (122) in einer zweiten Legerichtung entgegengesetzt zu der ersten Legerichtung um das Festigkeitselement (110) verseilt wird, **gekennzeichnet durch**
- Einspritzen einer Klebekomponente (140) in zumindest einen Befestigungsbereich (151, 152, 153) des optischen Kabels (1), wobei der Befestigungsbereich (151, 152, 153) ein Bereich des optischen Kabels (1) ist, in dem der zumindest eine erste Abschnitt (121) der Aderhüllen (120) an den zumindest einen zweiten Abschnitt (122) der Aderhüllen (120) angrenzt,
- Pressen der Klebekomponente in einen ersten Bereich (101) des optischen Kabels (1) zwischen die Aderhüllen (120) und das Festigkeitselement (110) und in einen zweiten Bereich (102) des optischen Kabels (1) zwischen die Aderhüllen (120) und den Kabelmantel (200), so dass der erste und der zweite Bereich (101, 102) vollständig mit der Klebekomponente (140) gefüllt werden, und
- Kühlen der Klebekomponente (140), um die Aderhüllen (120) an dem Festigkeitselement (110) zu befestigen.

11. Verfahren nach Anspruch 10, umfassend:
Verseilen der Aderhüllen (120) um das Festigkeitselement (110), so dass sich die Legerichtung der Aderhüllen (120) abrupt von der linken Legerichtung zu der rechten Legerichtung an einem Wendepunkt (160) ändert, der sich in dem zumindest einen Befestigungsbereich (151, 152, 153) des optischen Kabels (1) befindet.

12. Verfahren nach einem der Ansprüche 10 oder 11, umfassend:
Verseilen der Aderhüllen (120) um das Festigkeitselement (110), so dass die Aderhüllen ihre Verseilrichtung in dem zumindest einen Befestigungsbereich (151, 152, 153) ändern, ohne gleichlaufend entlang der Längsrichtung des optischen Kabels (1) verseilt zu sein.

## Revendications

1. Câble optique, comprenant :
- un élément de membrure de force (110) ;
- une pluralité de tubes protecteurs (120), dans lequel chacun des tubes protecteurs (120) encapsule au moins une fibre optique (130) ;
- une gaine de câble (200) entourant la pluralité des tubes protecteurs (120) ;
- dans lequel chacun des tubes protecteurs (120) présente au moins une première section (121) et au moins une seconde section (122) adjacente à la au moins une première section (121), dans lequel la au moins une première section (121) des tubes protecteurs (120) est toronnée autour de l'élément de membrure de force (110) dans une première direction de torsion de câblage, et la au moins une seconde section (122) des tubes protecteurs (120) est toronnée autour de l'élément de membrure de force (110) dans une seconde direction de torsion de câblage opposée à la première direction ;
- un composant adhésif (140) disposé dans au moins une zone de fixation (151, 152, 153) du câble optique (1), la au moins une zone de fixation (151, 152, 153) étant une zone régionale du câble optique (1), où la au moins une première section (121) des tubes protecteurs (120) est attenante à la au moins une seconde section (122) des tubes
protecteurs (120), dans lequel les tubes protecteurs (120) sont fixés sur l'élément de membrure de force (110) par le composant adhésif (140),
**caractérisé en ce que**;
le composant adhésif (140) est disposé dans la au moins une zone de fixation (151, 152, 153) du câble optique, de telle sorte qu'une première zone (101) du câble optique entre les tubes protecteurs (120) et l'élément de membrure de force (110) et une seconde zone (102) du câble optique entre les tubes protecteurs (120) et la gaine de câble (200) sont entièrement remplies avec le composant adhésif (140).

2. Câble optique selon la revendication 1,
dans lequel la direction de torsion de câblage des tubes protecteurs 120) change de manière abrupte de la première direction de torsion de câblage à la seconde direction de torsion de câblage en un point d'inversion respectif (160) des tubes protecteurs situé dans la au moins une zone de fixation (151, 152, 153) du câble optique (1).

3. Câble optique selon la revendication 1 ou 2,
dans lequel les tubes protecteurs (120) sont toronnés autour de l'élément de membrure de force (110), de telle sorte que les tubes protecteurs changent leur direction de toronnage sur le point d'inversion (160) dans la au moins une zone de fixation (151, 152, 153) sans être toronnés de manière unidirectionnelle le long de la direction longitudinale du câble optique (1).

4. Câble optique selon l'une quelconque des revendications 1 à 3,
- dans lequel chacune des au moins une première section (121) et au moins une seconde section (122) des tubes protecteurs (120) présente des portions d'extrémité (121a, 121b, 122a, 122b) et une portion de milieu (121c, 122c) située entre les portions d'extrémité respectives (121a, 121b, 122a, 122b) ;
- dans lequel une des portions d'extrémité (121a) de la au moins une première section (121) des tubes protecteurs est attenante à une des portions d'extrémité (122b) de la au moins une seconde section (122) des tubes protecteurs ;
- dans lequel la au moins une zone de fixation (151, 152, 153) s'étend de la frontière entre la portion de milieu (121c) et ladite une des portions d'extrémité (121a) de la au moins une première section (121) des tubes protecteurs (120) à la frontière entre la portion de milieu (122c) et ladite une des portions d'extrémité (122b) de la au moins une seconde section (122) des tubes protecteurs (120).

5. Câble optique selon la revendication 4,
- dans lequel les portions d'extrémité (121a, 121b) de la au moins une première section (121) des tubes protecteurs (120) et les portions d'extrémité (122a, 122b) de la au moins une seconde section (122) des tubes protecteurs (120) sont enrobées dans le composant adhésif (140), et
- dans lequel la portion de milieu (121c, 122c) de chacun des tubes protecteurs n'est pas couverte par le composant adhésif (140).

6. Câble optique selon l'une quelconque des revendications 1 à 5,
dans lequel la au moins une zone de fixation (151, 152, 153) présente une longueur égale à deux à trois fois le diamètre de l'un des tubes protecteurs (120).

7. Câble optique selon l'une quelconque des revendications 4 à 6, comprenant :
- au moins une première, deuxième et troisième zones de fixation (151, 152, 153),
- dans lequel le composant adhésif (140) est disposé dans chacune des au moins une première, deuxième et troisième zones de fixation (151, 152, 153) ;
- dans lequel les première et deuxième zones de fixation (151, 152) sont disposées à distance l'une de l'autre dans une direction longitudinale du câble optique (1), dans lequel la distance présente une longueur d'une région du câble optique où se trouve la portion de milieu (121c) de la au moins une première section (121) des tubes protecteurs (120), et
- dans lequel les deuxième et troisième zones de fixation (152, 153) sont disposées à distance l'une de l'autre dans une direction longitudinale du câble optique (10), dans lequel la distance présente la longueur d'une autre région du câble optique où se trouve la portion de milieu (122c) de la au moins une seconde section (122) des tubes
protecteurs (120).

8. Câble optique selon l'une quelconque des revendications 1 à 7, dans lequel le composant adhésif (140) est de la colle.

9. Câble optique selon la revendication 8,
dans lequel la colle contient un élément parmi un polymère thermoplastique, et/ou une huile, et/ou un agent émollient ou des mélanges de ceux-ci.

10. Procédé de fabrication d'un câble optique, comprenant les étapes consistant à :
- fournir un élément de membrure de force (110) ;
- toronner une pluralité de tubes protecteurs (120) présentant au moins une première section (121) et au moins une seconde section (122) adjacente à la au moins une première section (121) autour de l'élément de membrure de force (110), de telle sorte que la au moins une première section (121) des tubes protecteurs (120) est toronnée autour de l'élément de membrure de force (110) dans une première direction de torsion de câblage, et que la au moins une seconde section (122) des tubes protecteurs (120) est toronnée autour de l'élément de membrure de force (110) dans une seconde direction de torsion de câblage opposée à la première direction de torsion de câblage, **caractérisé par** les étapes pour :
- injecter un composant adhésif (140) disposé dans au moins une zone de fixation (151, 152, 153) du câble optique (1), la zone de fixation (151, 152, 153) étant une zone du câble optique (1), où la au moins une première section (121) des tubes protecteurs (120) est attenante à la au moins une seconde section (122) des tubes protecteurs (120) ;
- presser le composant adhésif (140) dans une première zone (101) du câble optique (1) entre les tubes protecteurs (120) et l'élément de membrure de force (110) et une seconde zone (102) du câble optique (1) entre les tubes protecteurs (120) et la gaine de câble (200), de telle sorte que les première et seconde zones (101, 102) sont entièrement remplies avec le composant adhésif (140), et
- refroidir le composant adhésif (140) afin de fixer les tubes protecteurs (120) sur l'élément de membrure de force (110).

11. Procédé selon la revendication 10, comprenant l'étape pour :
- toronner les tubes protecteurs (120) autour de l'élément de membrure de force (110), de telle sorte que la direction de torsion de câblage des tubes protecteurs (120) change de manière abrupte de la direction gauche de torsion de câblage à la direction droite de torsion de câblage en un point d'inversion (160) situé dans la au moins une zone de fixation (151, 152, 153) du câble optique (1).

12. Procédé selon la revendication 10 ou 11, comprenant l'étape pour :
- toronner les tubes protecteurs (120) autour de l'élément de membrure de force (110), de telle sorte que les tubes protecteurs (120) changent leur direction de toronnage dans la au moins une zone de fixation (151, 152, 153) sans être toronnés de manière unidirectionnelle le long de la direction longitudinale du câble optique (1).
